# EUROPEAN PATENT SPECIFICATION

(11) **EP 0 995 930 B1**
(45) Date of publication and mention of the grant of the patent: **28.05.2003**
(21) Application number: 98308638.0
(22) Date of filing: 22.10.1998
(51) Int. Cl.: F16H 37/04

(54) **Automobile transmission device**
Fahrzeuggetriebe
Transmission automobile

(43) Date of publication of application: 26.04.2000
(73) Proprietor: Tseng, Sheng-Tsai, Long Tan Hsian, Taoyuan Hsien (TW)
(72) Inventor: Tseng, Sheng-Tsai, Long Tan Hsian, Taoyuan Hsien (TW)
(74) Representative: Pratt, David Martin

(56) References cited:
- EP-A- 0 468 107
- US-A- 4 610 181
- US-A- 4 860 615
- US-A- 5 437 205

## Description

This invention relates to an automobile transmission device, more specifically it relates to an automobile transmission system serving to control the forward and reverse movement of an automobile by means of a planetary gearset, so as to achieve increased output power and prolonged service life.

Efforts directed at the development of conventional automobile transmission systems have been continuous for a very long time. While there have been quite a number of truly commendable innovations and developments in automobile transmission systems, the ultimate design has never been other than the manipulation and co-ordination of gear assemblies, simply for the reason that, so far as control of a vehicle's forwards or backwards movement is concerned, a gear assembly is doubtless a most effective form of design.

Conventional designs of automobile transmission systems are complicated in structure, as can be appreciated by referring to gear assembly layout, comprising essentially an input gear assembly serving to feed transmission power and an output gear assembly serving to deliver power. A vehicle's velocity, advancing or reversing, is controlled by matching co-ordination between the input gear assembly and the output gear assembly. With a conventional design of transmission system, to get it to work, respective input gears and output gears must be coupled in an open mode or by engagement, resulting inevitably in constant engagement between the input gear assembly and the output gear assembly. This leads to a reduction in the expected service life of the entire gear assembly system. All the relevant input and output gear assemblies must go through a change in running direction in order to control the active status of the vehicle, forward or backward movements inclusive, and that means an additional burden to the gear system. Also co-ordination between all the working gear assemblies is required.

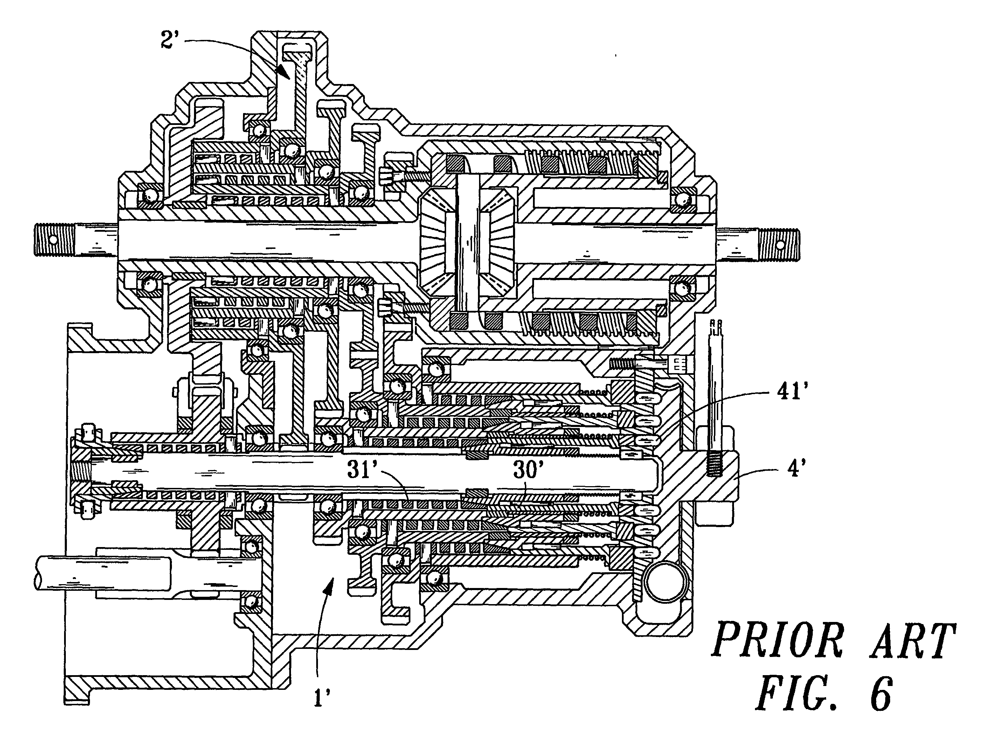

In view of the foregoing, the inventor has for some time been working out possible solutions, and eventually come out with an RDT, a revolutionary direct transmission, an illustration of which is shown in Fig. 6. This known automobile transmission device is described in my US patent specification no. 5437205 wich shows the features of the preamble of claim 1. In addition to being awarded patents in more than one country, it was granted three medals at the Pittsburg International Invention Fair, USA, May 1998. The most salient feature of the invention lies in making possible sustained operation of respective input, and output gear assemblies 1', 2' under engaged conditions, so that power loss is kept to the minimum, and mechanical damage is avoided at the same time. Optimum permutation/combination techniques are utilised, so that a maximised shifting of gear ratios is achieved with the minimum possible gear assemblies.

The inventor is working for even better products; and, in the process, has found the following issues pertinent to the existing conventional arts, deserving immediate solutions:
1. In a conventional design of vehicle transmission, the input gear 1' in conjunction with the output gear 2', in addition to being responsible for speed variations, has to control the vehicle's forward/backward movements, such a task necessarily resulting in a more complicated structure.
2. In a conventional design of vehicle transmission, to control the vehicle's forward/backward movements, the responsible gears 1', 2' necessarily have to go through a change in direction of rotation, and that inevitably results in interactive wearing of the gears 1', 2', and their service life is thus greatly prejudiced;
3. According to traditional arts, the automobile transmission derives its power by a conical head 30' which carries a spring-like unit 31' in rotation, so that power is transmitted to the input gear 1'. However, due to lack of consistent holding of the interfacing contact between the conical head 30' and the spring-like unit 31', idle running is often the case, and that means a waste of power; and
4. In an automobile transmission of a conventional design, matching between the input gear 1' and the output gear 2' is controlled by means of rods 41' that are driven by a gearing disk 4', so that speed variation can be made. Unfortunately, however, the rods 41' in the process can tilt, and that results in inconsistent coupling between the input gear 1' and the output gear 2', such that the power output is reduced.

An aim of the present invention is to provide an automobile transmission comprising the installation of a planetary gearset between the output gear and the speed differentiator so that, by the ability to effect diversion of transmission, the planetary gearset is able to control the vehicle in its forward/backward movements, so that the input gear and the output gear assemblies may be solely and entirely utilised in the control of speed variation.

Another aim of the present invention is to provide an automobile transmission which is of simple structure, upgraded output power and prolonged service life.

A further aim of the present invention is to provide an automobile transmission having an adaptor employed in place of a conventional conical head, a ratchet edge being provided on the interfacing contact between the adaptor and a spring-like unit, resulting in an overlapping engagement, so that a more reliable transmission of power is made possible with substantial abatement of power wastage.

A further aim of the present invention is to provide an automobile transmission wherein rolling beads are employed in place of conventional rods, to provide accuracy realised by the extent of contact that rolling beads provide, so more accurate coupling co-ordination is made possible between the input gear assembly and the output gear assembly.

The invention will now be described in greater detail, by way of example, with reference to the drawings, in which:-
Figure 1 is a cross-sectional view of an automobile transmission device constructed in accordance with the invention;
Figure 1A is an exemplary illustration of the device of Figure 1 under execution of a first sleeving operation;
Figure 1B is an exemplary illustration of the device of Figure 1 under execution of a second sleeving operation;
Figure 1C is an exemplary illustration of the device of Figure 1 under execution of a third sleeving operation;
Figure 2 is a cross-sectional view of a braking structure of the device of Figure 1, active in operation;
Figure 3A is an exploded cross-sectional view of the structure of a first spring-like unit of the device of Figure 1;
Figure 3B is an illustration of the first spring-like unit;
Figure 3C is an illustration of a second spring-like unit of the device of Figure 1;
Figure 4A illustrates a first form of speed regulation disk of the device of Figure 1;
Figure 4B illustrates a second form of speed regulation disk of the device of Figure 1;
Figure 4C illustrates a third form of speed regulation disk of the device of Figure 1;
Figure 4D illustrates a fourth form of speed regulation disk of the device of Figure 1;
Figure 4E illustrates a fifth form of speed regulation disk of the device of Figure 1;
Figure 4F illustrates a sixth form of speed regulation disk of the device of Figure 1;
Figure 5A illustrates a first form of power transmission routing according to the invention;
Figure 5B illustrates a second form of power transmission routing according to the invention;
Figure 5C illustrates a third form of power transmission routing according to the invention;
Figure 5D illustrates a fourth form of power transmission routing according to the invention;
Figure 5E illustrates a fifth form of power transmission routing according to the invention;
Figure 5F illustrates a sixth form of power transmission routing according to the invention; and
Figure 6 is an illustration of the structural perspective of a conventional automobile transmission system.

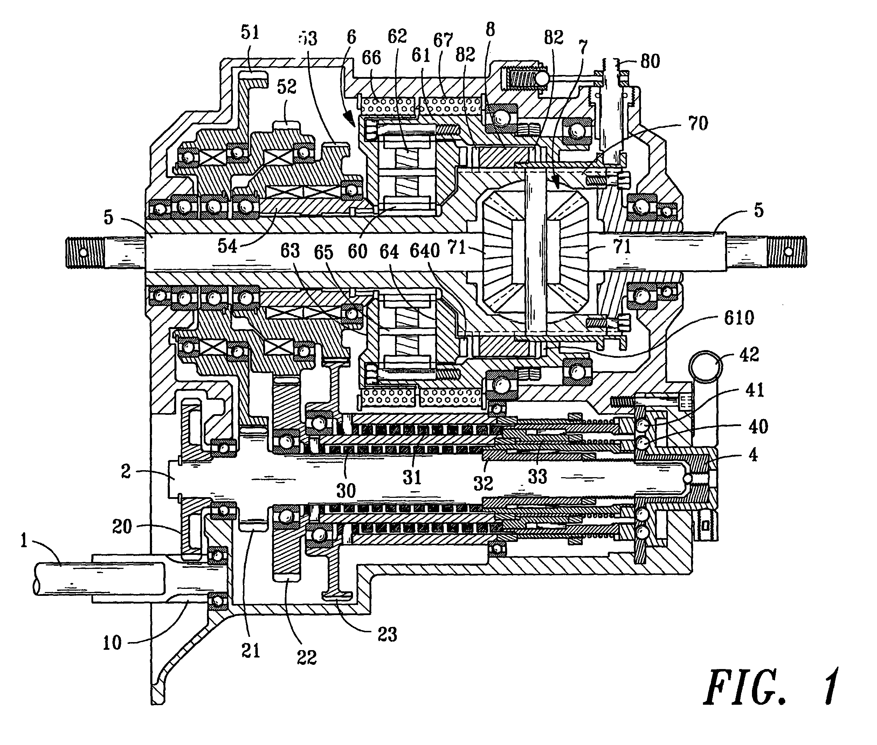

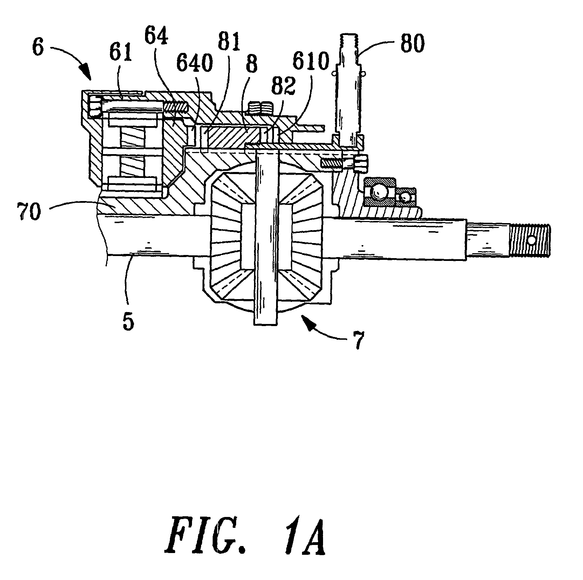

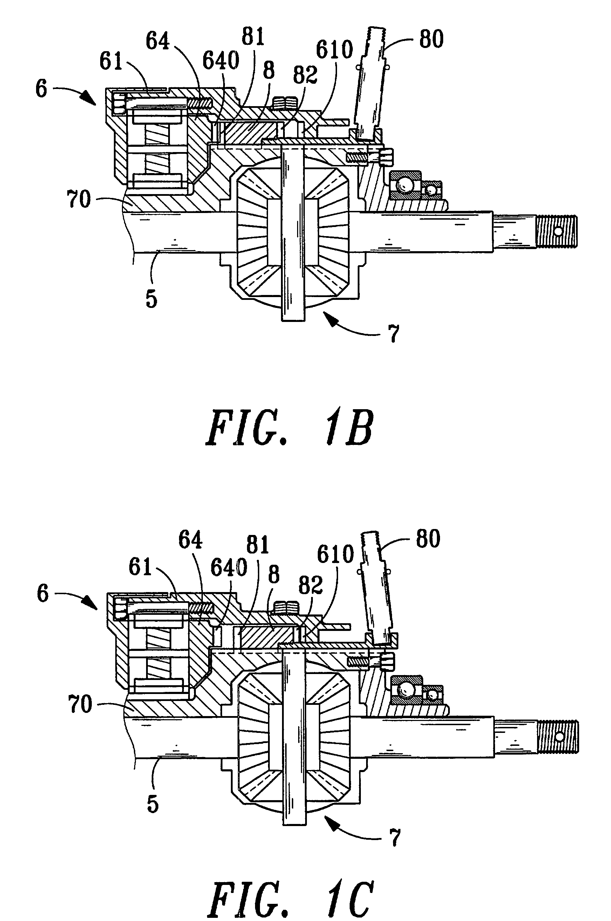

Referring to the drawings, Figure 1 shows an automobile transmission system having a transmission shaft 1 having one end connected to the power source of the automobile (not shown), and the other end connected to an input shaft by means of reduction gears 10, 20, whereby power from the source is transmitted to the input shaft 2. The input shaft 2 is provided with three or more input gears 21, 22, 23, the first input gear 21 being mounted directly onto the input shaft 2, the second input gear being rotatably mounted on the input shaft 2, and the third input gear 23 being rotatably mounted on a sleeving 220 as an extension of the second input gear 22. In addition, a respective spring-like unit 30, 31 is provided behind each of the second and third input gears 22, 23. A speed regulation disk 4 is provided behind the two spring-like units 30, 31, the speed regulation disk having rolling beads 40, 41 overlying the surface of contact between the speed regulation disk 4 and the two spring-like units. Thus, rotation of the speed regulation disk 4 causes the rolling beads 40, 41 either to bear upon, or else be set loose from, the two spring-like units 30, 31. Once compressed, the spring-like units 30, 31 will clamp the second and the third input gears 22, 23 onto the input shaft 2, so as to rotate with the input shaft. On the contrary, once the two spring-like units 30, 31 are set loose, the said second and third input gears 22, 23 will release control by the input shaft 2; so that, by changing the angle of rotation of the speed regulation disk 4, control of the second and the third input gears 22, 23 is permitted, and speed regulation is accomplished.

The input gears 21, 22, 23 respectively mesh with three output gears 51, 52, 53 each mounted on an output gear 5. A planetary gearset is provided on the output shaft 5 behind the three output gears 51, 52, 53, the planetary gearset 6 having a central sun gear 60, a ring gear 61, and a plurality of planetary gears 62. An intermediate transmission shaft 54 extends from the output gears 51, 52, 53 to link to the sun gear 60; so that, by the action of the three output gears 51, 52, 53, the planetary gearset 6 is carried in rotation. The planetary gearset 6 is provided with front and rear covers 63, 64, the covers being locked to each other by means of shafts 65, so that the covers can rotate in step with the planetary gears 62. The perimeter of the front cover 63 is extended to point outside the ring gear 61, while the outer rim of the rear cover 64 is provided with a face gear 640.

Referring now to Figures 1A, 1B and 1C, a speed differentiator 7 is mounted behind the planetary gearset 6. A sleeving 8 has an inner edge which is inserted into the speed differentiator casing 70, so that the latter rotates therewith to transfer power. A control rod 80 is attached to the sleeving 8 so that the sleeving 8 can slide on the speed differentiator casing 70. Consequently, power applied to the planetary gearset 6 is transmitted to the speed differentiator 7, to be delivered as a power output from the output shaft 5 by way of an umbrella gear 71 on both sides. On the edge on both sides of the sleeving 8 are mounted respectively gear assemblies 81, 82. Thus, when the sleeving 8 is pushed backwards, the gear assembly 81 is brought into engagement with the face gear 640 on the rear cover 64, so that power is output by way of the ring gear 61. When the sleeving 8 moves forward, the gear assembly 82 is brought into engagement with the end gear 610 on the extended portion of the ring gear 61, so that power is delivered by way of the ring gear 61, and the purpose of controlling the vehicle to move ahead or backwards is achieved.

A characteristic feature of the planetary gearset 6 is that, when the ring gear 61 is unable to move due to external obstruction, the planetary gearset 62 will respond by following the sun gear 60 in rotation, in the same direction as the sun gear. Further, when the planetary gears 62 are blocked, the ring gear 61 will respond by rotating in a direction contrary to the direction in which the sun gear 60 rotates. So, if the user sets the control rod 80 in the middle position, the sleeving 8 will not come into contact with any motor device, so that no output is possible from the output shaft 5, and idle running takes place. On the contrary, once the control rod 80 is pushed backwards, the sleeving 8 will push ahead, so that the gear assembly 81 and the face gear 640 on the rear cover 64 are brought into engagement with each other, whereupon power is transmitted via the planetary gears 62 to the speed differentiator 7, and output by way of the output shaft 5, and the vehicle will remain a forwards movement. When the control rod 80 is pushed ahead, the sleeving 8 will move backwards, so that the gear assembly 82 is brought into engagement with the end gear 610 on the extended portion of the ring gear 61, and power is transmitted by way of the ring gear 61 to the speed differentiator 7, and on to the output shaft 5 for output, whereupon the vehicle responds by moving backwards.

Referring once again to Figure 1, it will be appreciated that restriction of the movement o the planetary gearset 6, is executed by the application of a braking layer 66 over the outer part of the front cover 63 that is driven to simultaneous rotation with the planetary gears 62, while a further braking layer 67 may also act on the exterior part of the ring gear 61. The provision of the braking layers 66, 67 is such that, while the vehicle is moving forwards, the braking layer 67 is active to render the ring gear 61 inoperative; and, when the vehicle is reversing, the braking layer 66 is active so that movement of the planetary gears 62 around the sun gear 60 is suspended. When both the braking layers 66, 67 are active, the vehicle comes to a full stop.

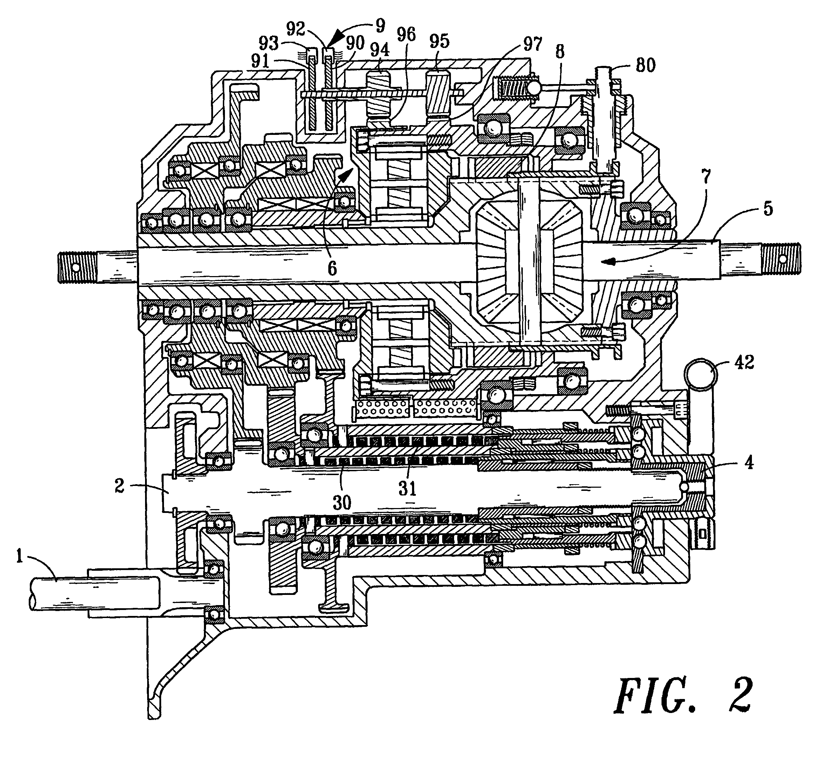

Referring now to Figure 2, it will be appreciated that the present invention may very well incorporate the latest technology, such as the advanced ABS braking system 9, so as to reinforce the braking performance. The ABS braking system comprises two braking disks 90, 91, each equipped with a braker 92, 93, and with the core being extended to incorporate braking gears 94, 95. The perimeters of the front cover 63 and the ring gear 61 are respectively equipped with external gears 96, 97 in engagement with the two braking gears 94, 95, to permit individually executed braking actions with the braking disks 90, 91 using the two brakers 92, 93, with the purpose of restricting the planetary gears 62 or the ring gear 61 from rotation, thereby controlling the vehicle to move ahead or backwards.

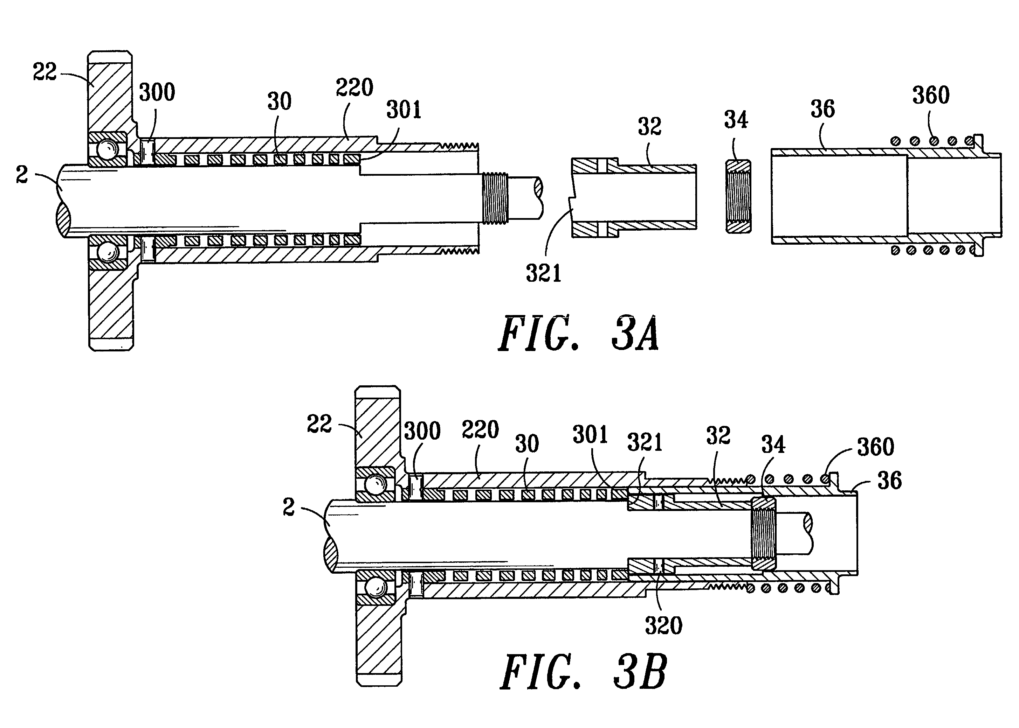

Referring to Figures 3A and 3B, the first spring-like unit 30 installed between the input shaft 2 and the sleeving 220 on an extension of the second input gear 22, the front end of the unit 30 being locked to the input shaft 2 across the sleeving 220, using a fixing pin 300, so that the first spring-like unit 30 may follow in step with the second input gear 22 in rotation about the input shaft 2, the open face of the rear end of the first spring-like unit 30 being furnished with a ratchet 301. On the input shaft 2, located behind the first spring-like unit 30, there is provided an adaptor 32. On the wall around its front end there is also provided a ratchet 321 aligned with the ratchet 301 for coupling with the adaptor, the adaptor being locked to the input shaft 2 by a fixing pin 320 so that the adaptor may rotate with the input shaft 2. A stop nut 34 is locked onto the rear side of the adaptor 32 so as to fix the position of all relevant assemblies. On the perimeter of the adaptor 32, there is provided a pusher sleeving 36 whose front end abuts the outmost rim of the ratchet 301 of the first spring-like unit 30, the rear side of the pusher sleeving 36 abutting upon the rolling beads 40 of the speed regulation disk 4, and the periphery of the pusher sleeving 36 being provided with a spring 360. When the pusher sleeving 36 is pushed forwards by the rolling beads 40, the first spring-like unit 30 is compressed so that the adaptor 32 is separated from the first spring-like unit 30, whereupon it is unlikely for power from the input shaft 2 to be transmitted to the first spring-like unit 30 by way of the adaptor 32. When the pusher sleeving 36 regains its form by the action of the spring 360 once the external power is removed, the adaptor 32 will once again engage itself with the first spring-like unit 30. What follows is a follow up rotation of the second input gear 23 in step with the input shaft 2; and, as the input shaft 2 turns faster, the first spring-like unit 30 will tighten up proportionately. That means yet greater momentum is produced and forthcoming from the second input gear 22 and also, that coupling between the adaptor 32 and the ratchets 301, 321 on the first spring-like unit 30 makes possible power transmission without unwanted losses and damages whatsoever.

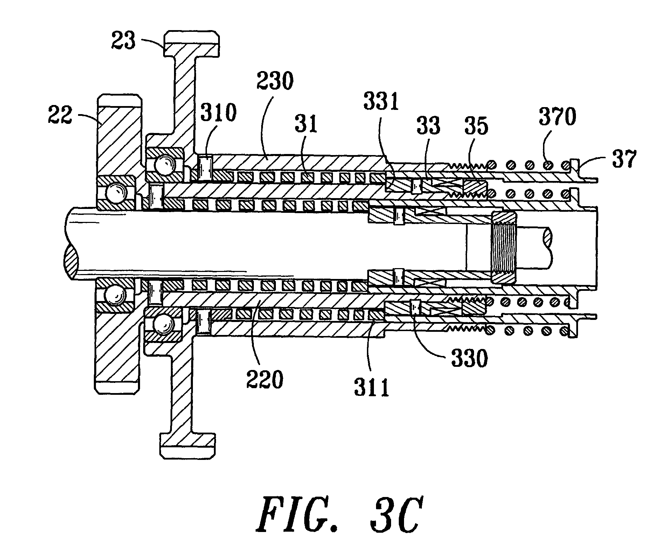

Referring now to Figure 3C, illustrating the layout of the second spring-like unit 31 and the second input gear 22, it can be appreciated that the second spring-like unit 31 and the third input gear 23 are jointly mounted outside the sleeving 220. The second spring-like unit 31 is locked to the sleeving 220 by means of a fixing pin 310 by way of a sleeving 230 formed as an extension of the third input gear 23. On the rear side of the second spring-like unit 31 there is provided an adaptor 33. On that end of the adaptor 33 that is in contact with the second spring-like unit 31 there are furnished interengageable ratchets 311, 331 locked to the sleeving 230 by means of a fixing pin 330. A pusher sleeve 37 abuts the rear side of the second spring-like unit 31, the pusher sleeve 37 being provided with a spring 370 on its perimeter. As regards both its installation and implementation, the second spring-like unit 31 and the third input gear 23 are similar to those for the first spring-like unit 30 and the second input gear 22, as described hereinbefore.

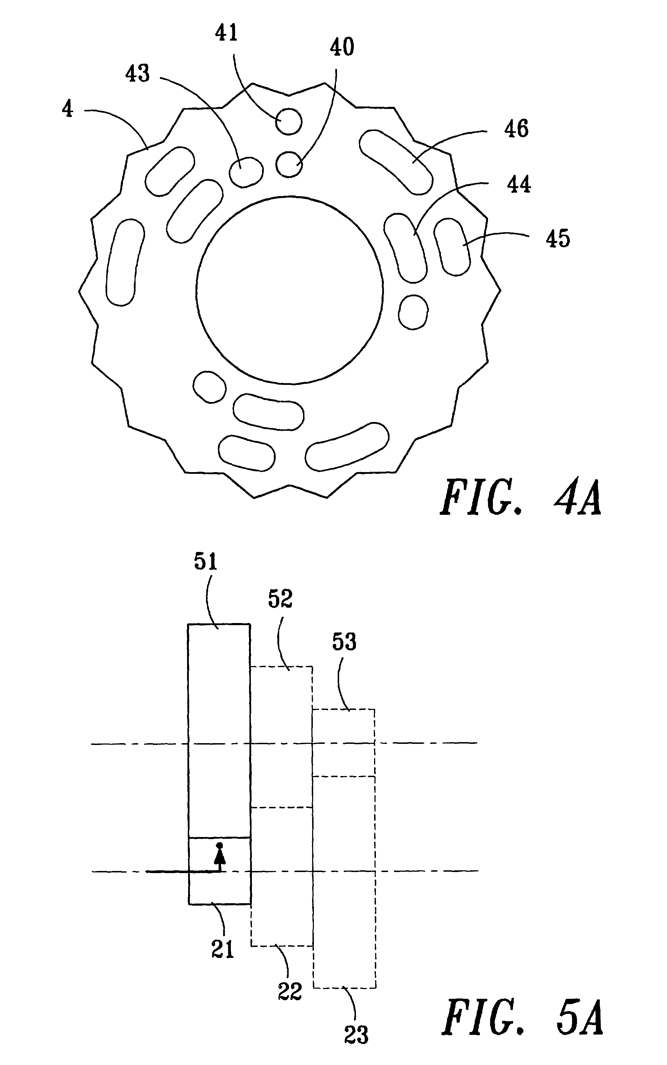

Referring to Figures 4A and 5A, it will be appreciated that, to achieve speed variation purposes, the invention utilises the speed regulation disk 4 to control interdependent correlation between the input gear assemblies 21, 22, 23 and the output gear assemblies 51, 52, 53. The speed regulation disk 4 is mounted on the farthest end of the input shaft 2, with its angle of rotation controlled by a revolving lever 42. The speed regulation disk 4 is divided into three equal cells, each furnished with rolling beads 40, 41, one on the inner ring, another on the outer ring, and with the beads 40, 41 being aligned on the same centripetal axis as the speed regulation disk 4, the beads abutting respectively upon the rear side of each of the two pusher sleeves 36, 37. Inbetween said cells are provided four grooves 43, 44, 45, 46 to accommodate the rolling beads 40, 41. The first groove 43 lies on the leftmost position of the inner ring of each cell. The second groove 44 lies on the rightmost position of the inner ring of each cell, in line with the spacing fit for two beads being displaced leftwards. The third groove 45 lies on the rightmost position of the outer ring of each cell, while the fourth groove 46 lies in a position spaced apart by one rolling bead's span off the left side of the third groove 45. All the four grooves 43, 44, 45, 46 gradually merge onto the surface of the speed regulation disk 4 in a direction as guided by the rolling beads 40, 41, so that the beads 40, 41 may slide smoothly into, or out of, any of the grooves 43, 44, 45, 46.

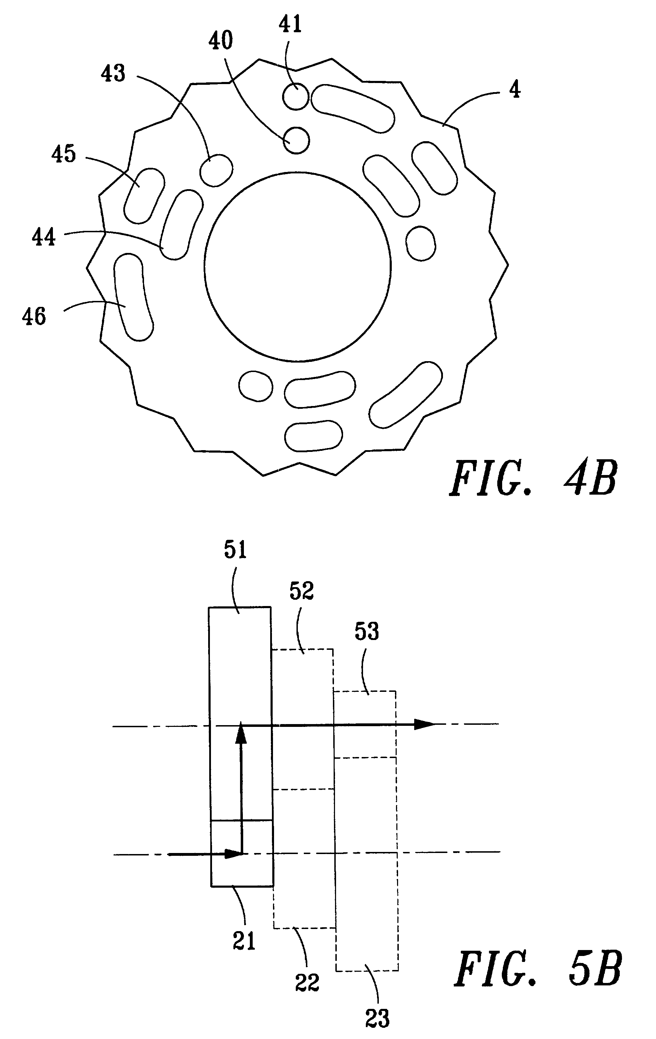

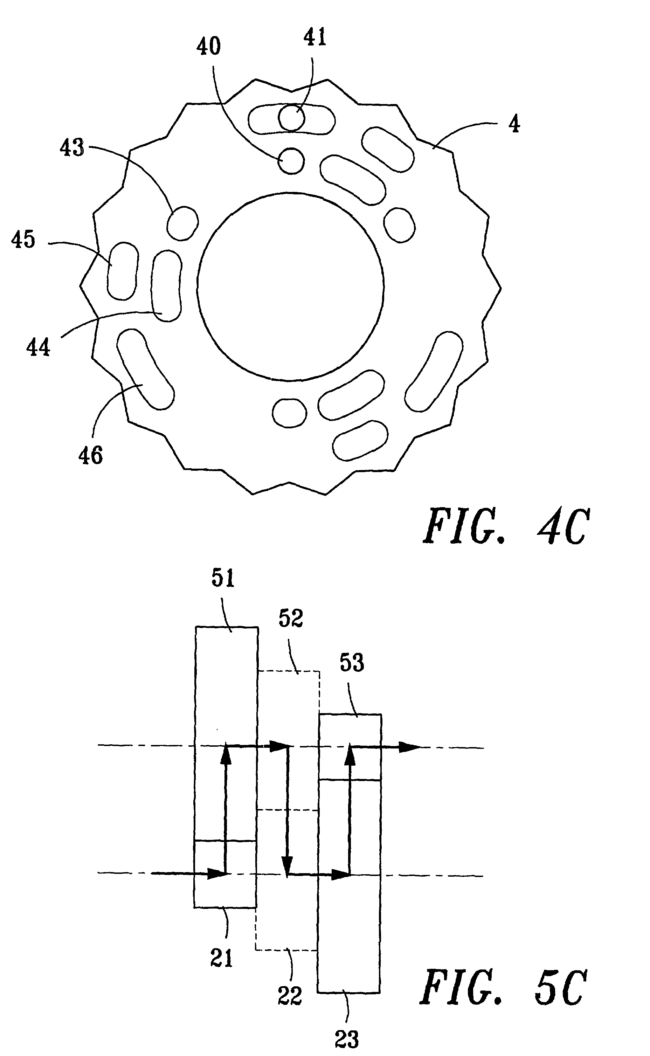

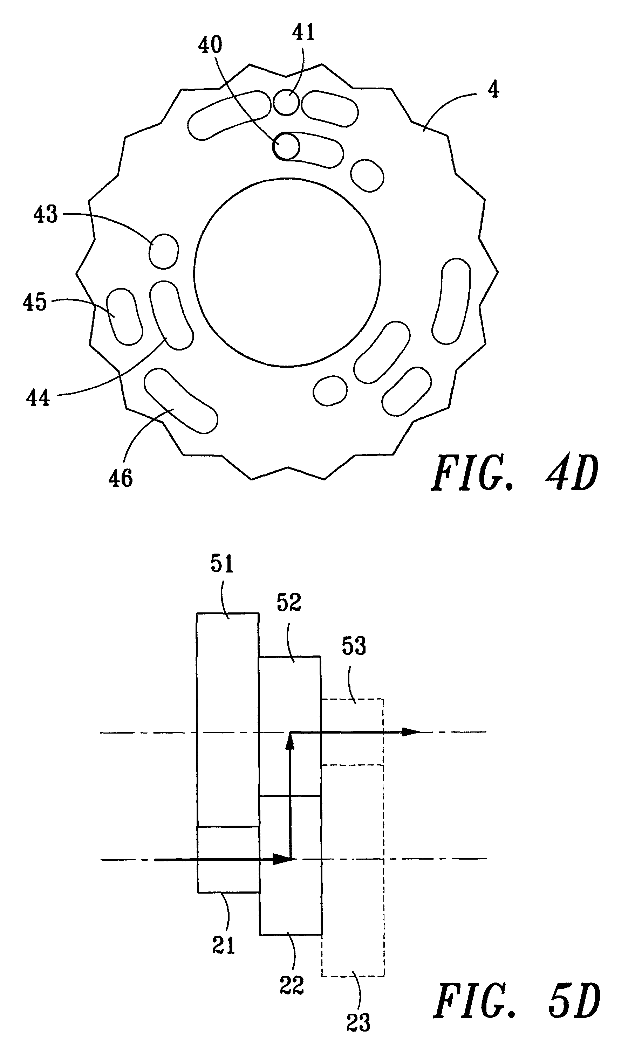

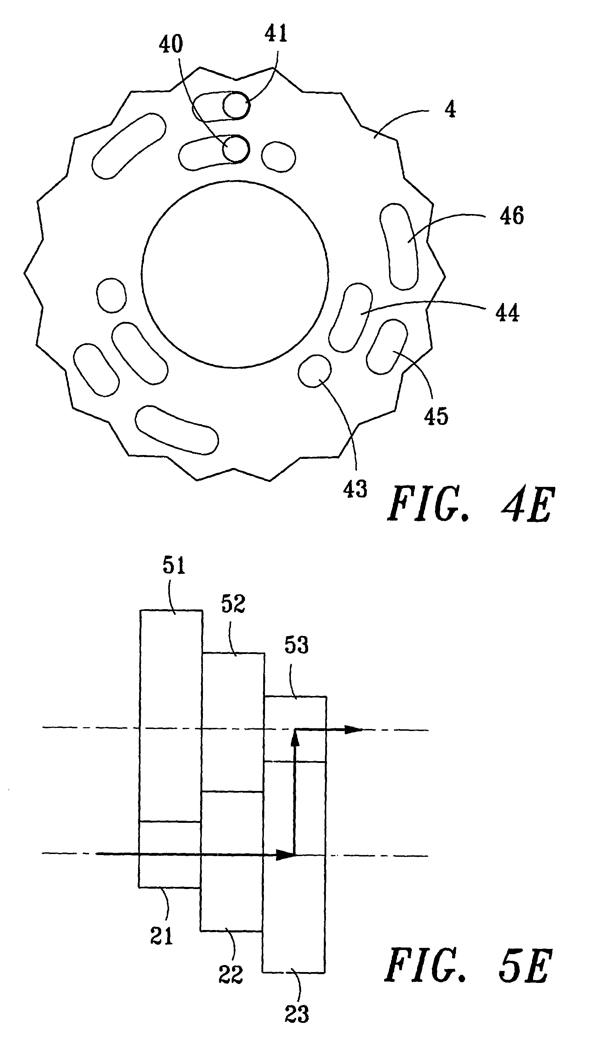

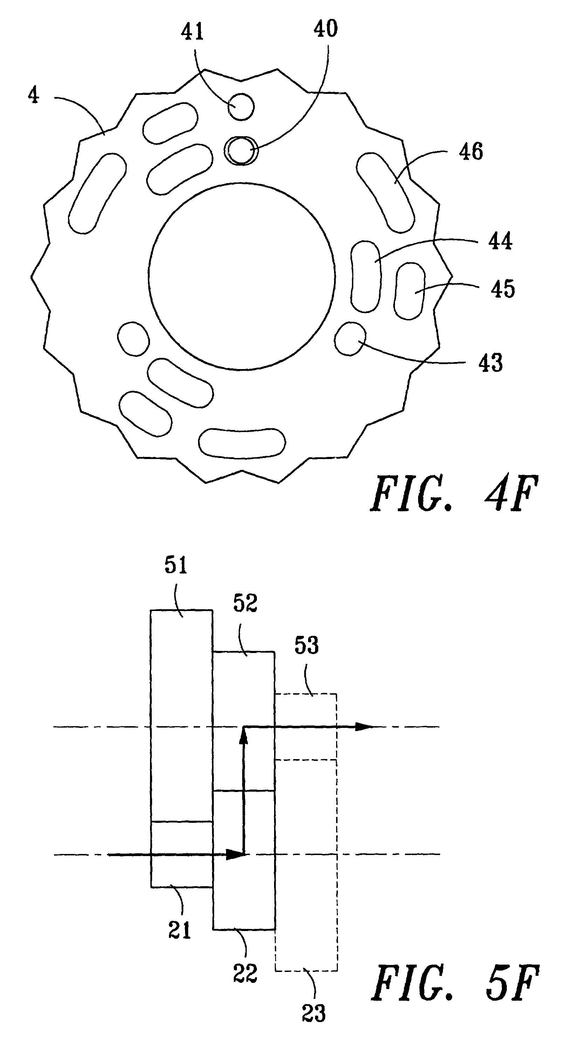

The installation described in the foregoing is laid out so that, when the vehicle is at rest, the sleeving 8 rests in the middle position and as such is, and remains, clear of contact with any device (compare Figure 1A), so that transmission of power is denied for output by way of the output shaft 5. This is time concurrent with the speed regulation disk 4 lying by the right side of the first groove 43, with both the rolling beads 40, 41 emerging to the surface of the same speed regulation disk 4. As the vehicle gets started, the sleeving 8 is pushed back such that the gear assembly 81 is brought into engagement with the face gear 640 integral with the rear cover 64 (compare Figure 1B). Even with the vehicle maintaining a forwards movement, the speed regulation disk 4 at this juncture will still deviate by an angle somewhat to the left, while the two rolling beads 40, 41 still rest floating on the surface of the same speed regulation disk 4. Next, both rolling beads 40, 41 will move the two pusher sleeves 36, 37 ahead, so that the first and the second spring-like units 30, 31 being thereby compressed, release the adaptors 32, 33, and that results in the second and the third input gears 22, 23 being rendered inoperative for power transmission, and the first input gear 21 alone is capable of that task (see Figures 4B and 5B). To follow that, transmission of the speed regulation disk 4 continues to result in the dropping of the overlying rolling bead 41 into the fourth groove 46. Being thus acted upon by the spring 370, the pusher sleeve 37 releases the second spring-like unit 31. It is then time for intervention of the third input gear 23 to transmit power, serving, in this instance, to boost power output by way of the output shaft 5 (see Figures 4C and 5C). Next, speed regulation disk 4 is driven to result in the overlying rolling bead 41 moving out of the fourth groove 46, while the rolling bead 40 underneath moves into the second groove 44. It is then time for the second input gear 22 to transmit power, while the third input gear 23 loses the ability to transmit power, and that brings about another change in speed (see Figures 4D and SD). Finally, the speed regulation disk 4 is turned to the dead point, so that both the rolling beads 40, 41 fall into the second groove 44 and the third groove 45 respectively, and the second and the third input gears 22, 23 are thereby driven to transmit power together, achieving maximum output capabilities (see Figures 4E and 5E). When reversing is desired, the first step is to push the sleeve 8 forwards so that the gear assembly 82 is brought into engagement with the gear assembly 610 (see Figure 1C). The speed regulation disk 4 is then turned in the opposite direction to the dead point, so as to drive the overlying rolling bead 41 emerging on the surface of the speed regulation disk 4, while the rolling bead 40 underneath responds by falling into the first groove 43, and a vehicle reversing movement is made (see Figures 4F and 5F).

Compared to conventional technologies, such as are represented in the foregoing citations and other prior arts, an automobile transmission system according to the present invention has the following advantages.
1. provision of a planetary gearset to control forwards/backwards movements of a vehicle, so that all the input gears and all the output gears need only take charge of speed variations and nothing else, thereby alleviating operational burdens to all the input/output gears, and rendering smoother power transmission;
2. all the input/output gears maintain constant engagement conditions all the time, and only a constant steering direction needs to be maintained, thus simplifying execution, and avoiding gear inteferences, reflected in reduced failure rates and prolonged service life;
3. provision of ratchet interengagement between the spring-like units and the pusher sleeves, which serves to enhance power transmission efficiency while abating transmission loss, interpreted as far-reaching advances in terms of both upgraded transmission efficiency and energy savings;
4. employment of rolling beads instead of conventional stems or rods for transmission into guided grooves in the speed regulation disk, so that more solid and accurate executions in the compression or releasing of spring-like units are realised, and that also serving to enhance power transmission efficiencies.

## Claims

1. An automobile transmission device comprising:
a transmission shaft (1) having a first end linked to the power source of a vehicle, and a second end provided with a reduction gear assembly;
an input shaft (2) having a first end provided with a reduction gear assembly which is engageable with the reduction gear assembly of the transmission shaft, first, second and third input gears (21, 22 and 23) mounted adjacent to the reduction gear assembly of the input shaft, the first input gear (21) being fixed to the input shaft, the second input gear being rotatably mounted onto the same input shaft, and the third input gear being rotatably mounted onto a first sleeving (220) formed as an extension of the second input gear;
a first spring-like unit (30) mounted between the input shaft and the first sleeving, the front end of said unit being locked to the input shaft and to the first sleeving by a first fixing pin (300), the second end portion of the input shaft being provided with a first adaptor (32) having a first end abutting the first spring-like unit by means of ratchets (301, 321) provided thereon, a second fixing pin (320) being provided between the first adaptor and the input shaft, a first stop nut (34) being locked to that portion of the input shaft between the first adaptor and the second end of the input shaft, a first pusher sleeve (36) being mounted on the perimeter of the first adaptor, the first end of the first adaptor abutting the outermost annular surface of the ratchet of the first spring-like unit, and the periphery of the first pusher sleeve being surrounded by a first spring;
a second spring-like unit (31) between the first sleeving and a second sleeving (230) formed as an extension of the third input gear, a first end of said unit being locked to the second sleeving by a third fixing pin (310), a second adaptor (33) being provided on the input shaft between the second spring-like unit and the second end of the input shaft, a first end of the second adaptor forming an overlapping relation with the exposed surface of the second spring-like unit due to the presence of ratchets (311, 331) on both components, the second adaptor and the second sleeving being fixed to each other by a fourth fixing pin (330), a second stop nut being locked to a second end of the second adaptor, a second pusher sleeve (37) being mounted on the perimeter of the second adaptor, a first end of the second pusher sleeve abutting the outermost ring of the ratchet of the second spring-like unit, the perimeter of the second pusher sleeve being surrounded by a second spring;
a speed regulation disk (4), mounted on the second end of the input shaft, and in respect of which the angle of rotation is controlled by a lever (42), the speed regulation disk being divided into three cells each provided with a rolling bead (40) on an inner ring, and with a rolling bead (41) on an outer ring, both beads being concentrically aligned with the speed regulation disk, and respectively abutting that side of the second spring-like unit nearest the second end of the input shaft, each cell being further provided with four grooves to accommodate said rolling beads, whereof each first groove (43) lies at one end position of the respective cell and on the inner ring, the respective second groove (44) lies at the other end position of that cell and on the inner ring, that second groove being spaced from said first groove to leave a spacing for two rolling beads lining up side-by-side, the respective third groove (45) lies at the other end position of that cell and on the outer ring, and the respective fourth groove (46) lies in a position at a distance of one rolling bead from the third groove between the third groove and the rolling bead of the outer ring, all said grooves gradually merging onto the surface of the speed regulation disk in the direction in which the rolling beads are guided so that each rolling bead may smoothly enter or leave each of the grooves; and
a speed differentiator (7) having an outer casing (70) provided with a slider (8) whose inner rim is engaged with the outer casing of the speed differentiator so that the slider may carry the speed differentiator into rotation, whereby transmission of power is made, a respective gear assembly being provided on either side of the slider, the slider being linked to a control rod (80) serving to carry the slider to slide about on the outer casing of the speed differentiator whose output ends extend to an output shaft (5), a first end of the output shaft being provided with three output gears (51, 52, 53) to form a close engagement with the three input gears; **characterised by**
a planetary gearset (6) mounted on the output shaft behind the three output gears, the planetary gearset including a sun gear (60), the planetary gearset being linked with an intermediate transmission shaft (54) provided as an extension of the three output gears, the perimeter of the planetary gearset being a ring gear (61) engageable with the sun gear by a number of planetary gears (62), covers (63, 64) on first and second ends of the planetary gearset, both covers being interlocked with each other by means of shafts (65) across the planetary gears, the perimeter of the first cover extending to a point outside the ring gear, a first braking device (66) being provided on the first cover, a second braking device (67) being provided on the exterior side of the ring gear, the perimeter of the rim of the second cover being provided with a face gear (640), the extended end of the ring gear being provided with an edge gear (610) which, together with the face gear on the rear cover residing on either end of the slider transit space, can be matched with the gear assembly on the slider.

2. An automobile transmission system according to claim 1, wherein braking layers are provided on the first cover and on the outside of the inner ring gear, as part of the braking assembly, and both layers can be separately controlled so as to ensure the stability of the vehicle when running.

3. An automobile transmission system according to claim 1, wherein said braking assembly is part of an ABS braking system, and comprises two braking disks, each furnished with a braker, the core of each braking disk being extended to incorporate a braking gear, a first external gear being provided on the periphery of the first cover, and a second external gear being provided on the ring gear, so that together these two external gears may be engaged with the two braking gears so as to produce braking actions.

## Patentansprüche

1. Fahrzeuggetriebe
- mit einer Getriebewelle (1), die ein erstes, mit der Leistungsquelle eines Fahrzeugs verbundenes Ende und ein zweites mit einer Untersetzungsgetriebeanordnung versehenes Ende aufweist,
- mit einer Eingangswelle (2), die ein erstes Ende, das mit einer Untersetzungsgetriebeanordnung versehen ist, die mit der Untersetzungsgetriebeanordnung der Getriebewelle in Eingriff bringbar ist, und ein erstes, zweites und drittes Eingangszahnrad (21, 22 und 23) hat, die angrenzend an die Untersetzungsgetriebeanordnung der Eingangswelle angebracht sind, wobei das erste Eingangszahnrad (21) an der Eingangswelle befestigt ist, das zweite Eingangszahnrad drehbar auf der gleichen Eingangswelle angeordnet ist und das dritte Eingangszahnrad drehbar auf einem ersten Leitrohr (220) angebracht ist, das als eine Verlängerung des zweiten Eingangszahnrades ausgebildet ist,
- mit einer ersten federförmigen Einheit (30), die zwischen der Eingangswelle und dem ersten Leitrohr angeordnet ist, wobei das andere Ende der Einheit an der Eingangswelle und an dem ersten Leitrohr durch einen ersten Befestigungszapfen (300) arretiert ist, der zweite Endabschnitt der Eingangswelle mit einem ersten Zwischenstück (32) versehen ist, das mit einem ersten Ende an der ersten federförmigen Einheit mittels daran vorgesehener Sperren (301, 321) anliegt, zwischen dem ersten Zwischenstück und der Eingangswelle ein zweiter Befestigungszapfen (320) vorgesehen ist, an jenem Abschnitt der Eingangswelle zwischen dem ersten Zwischenstück und dem zweiten Ende der Eingangswelle eine erste Anschlagmutter (34) arretiert ist, eine erste Schubhülse (36) an dem Umfang des ersten Zwischenstücks angeordnet ist, das erste Ende des ersten Zwischenstücks an der äußersten Ringfläche der Sperre der ersten federförmigen Einheit anliegt und der Umfang der ersten Schubhülse von einer ersten Feder umgeben ist,
- mit einer zweiten federförmigen Einheit (31) zwischen dem ersten Leitrohr und einem zweiten Leitrohr (230), das als eine Verlängerung des dritten Eingangszahnrads ausgebildet ist, wobei ein erstes Ende der Einheit an dem zweiten Leitrohr durch einen dritten Befestigungszapfen (310) arretiert ist, ein zweites Zwischenstück (33) an der Eingangswelle zwischen der zweiten federförmigen Einheit und dem zweiten Ende der Eingangswelle vorgesehen ist, ein erstes Ende des zweiten Zwischenstücks eine überlappende Beziehung mit der freiliegenden Fläche der zweiten federförmigen Einheit aufgrund des Vorhandenseins von Sperren (311,331) an beiden Bauelementen bildet, das zweite Zwischenstück und das zweite Leitrohr aneinander durch einen vierten Befestigungszapfen (330) festgelegt sind, eine zweite Anschlagmutter an einem zweiten Ende des zweiten Zwischenstücks arretiert ist, eine zweite Schubhülse (37) an dem Umfang des zweiten Zwischenstücks angebracht ist, ein erstes Ende der zweiten Schubhülse an dem äußersten Ring der Sperre der zweiten federförmigen Einheit anliegt und der Umfang der zweiten Schubhülse von einer zweiten Feder umgeben ist,
- mit einer Drehzahlregulierscheibe (4), die an dem zweiten Ende der Eingangswelle angebracht ist und bezüglich derer der Drehwinkel durch einen Hebel (42) gesteuert wird, wobei die Drehzahlregulierscheibe in drei Zellen unterteilt ist, von denen jede mit einer Rollkugel (40) an einem inneren Ring und mit einer Rollkugel (41) an einem äußeren Ring versehen ist, beide Kugeln konzentrisch zu der Drehzahlregulierscheibe ausgerichtet sind und jeweils an der Seite der zweiten federförmigen Einheit anliegen, die dem zweiten Ende der Eingangswelle am nächsten liegt, jede Zelle weiterhin mit vier Nuten für die Aufnahme der Rollkugeln versehen ist, von denen jede erste Nut (43) an einer Endposition der entsprechenden Zelle und an dem inneren Ring liegt, die entsprechende zweite Nut (44) an der äußeren Endposition dieser Zelle und an dem inneren Ring liegt, die zweite Nut von der ersten Nut so beabstandet ist, dass ein Raum für das sich in einer Reihe Seite an Seite Aufstellen von zwei Rollkugeln bleibt, die jeweilige dritte Nut (45) an der anderen Endposition dieser Zelle und an dem äußeren Ring liegt und die jeweilige vierte Nut (46) an einer Position in einem Abstand einer Rollkugel von der dritten Nut zwischen der dritten Nut und der Rollkugel des äußeren Rings liegt, und alle Nuten allmählich auf der Oberfläche der Drehzahlregulierscheibe in der Richtung zusammenkommen, in der die Rollkugeln geführt werden, so dass jede Rollkugel glatt in jede der Nuten eintreten oder sie verlassen kann, und
- mit einer Drehzahldifferenzieranordnung (7), die ein äußeres Gehäuse (70) aufweist, das mit einem Schieber (8) versehen ist, dessen innerer Rand in Eingriff mit dem äußeren Gehäuse der Drehzahldifferenzieranordnung so steht, dass der Schieber die Drehzahldifferenzieranordnung in Drehung versetzen kann, wodurch eine Leistungsübertragung erfolgt, wobei eine entsprechende Zahnradanordnung auf jeder Seite des Schiebers vorgesehen ist, der Schieber mit einer Steuerstange (80) verbunden ist, die dazu dient, den Schieber auf einem äußeren Gehäuse der Drehzahldifferenzieranordnung herum gleiten zu lassen, deren Ausgangsenden sich zu einer Ausgangswelle (5) erstrecken, und ein erstes Ende der Ausgangswelle mit drei Ausgangszahnrädern (51, 52, 53) für die Herstellung eines innigen Eingriffs mit den drei Eingangszahnrädern (10) vorgesehen ist,
**gekennzeichnet**
- **durch** ein Planetengetriebe (6), das auf der Ausgangswelle hinter den drei Ausgangszahnrädern angeordnet ist, ein Sonnenzahnrad (60) aufweist und mit einer Getriebezwischenwelle (54) verbunden ist, die als ein Fortsatz der drei Ausgangszahnräder vorgesehen ist, wobei der Umfang des Planetengetriebes ein Ringzahnrad (61) ist, das mit dem Sonnenzahnrad durch eine Anzahl von Planetenzahnrädern (62) in Eingriff bringbar ist, Abdeckungen (63, 64) an dem ersten und zweiten Ende des Planetengetriebes vorgesehen sind, die beide durch durch die Planetenzahnräder gehende Schäfte (65) fest miteinander verbunden sind, sich der Umfang der ersten Abdeckung zu einem Punkt außerhalb des Ringzahnrads erstreckt, an der ersten Abdeckung eine erste Bremsvorrichtung (66) vorgesehen ist, an der Außenseite des Ringzahnrads eine zweite Bremsvorrichtung (67) vorgesehen ist, der Umfang des Randes der zweiten Abdeckung mit einem Frontzahnrad (640) versehen ist und das Fortsatzende des Ringzahnrads mit einem Randzahnrad (610) versehen ist, das zusammen mit dem Frontzahnrad, an der hinteren Abdeckung, die an jedem Ende des Schieberübergangsraums sitzt, zum Kämmen mit der Zahnanordnung an dem Schieber bringbar ist.

2. Fahrzeuggetriebesystem nach Anspruch 1, bei welchem an der ersten Abdeckung und an der Außenseite des inneren Ringzahnrads Bremsschichten als Teil der Bremsanordnung vorgesehen sind, wobei beide Schichten getrennt so steuerbar sind, dass die Stabilität des Fahrzeugs, wenn es fährt, gewährleistet ist.

3. Fahrzeuggetriebesystem nach Anspruch 1, bei welchem die Bremsanordnung Teil eines ABS-Bremssystems ist und zwei Bremsscheiben aufweist, von denen jede mit einem Bremser ausgerüstet ist, wobei der Kern jeder Bremsscheibe so ausgedehnt ist, dass sie ein Bremszahnrad einschließt, ein erstes äußeres Zahnrad am Umfang der ersten Abdeckung vorgesehen ist und ein zweites äußeres Zahnrad an dem Ringzahnrad vorgesehen ist, so dass diese beiden äußeren Zahnräder zusammen mit den beiden Bremszahnrädern so in Eingriff bringbar sind, dass Bremswirkungen erzeugt werden.

## Revendications

1. Dispositif de transmission automobile comprenant :
un arbre de transmission (1) ayant une première extrémité liée à la source d'énergie d'un véhicule, et une seconde extrémité munie d'un ensemble démultiplicateur ;
un arbre d'entrée (2) ayant une première extrémité munie d'un ensemble démultiplicateur qui est susceptible d'être mis en prise avec l'ensemble démultiplicateur de l'arbre de transmission, des premier, deuxième et troisième engrenages d'entrée (21, 22 et 23) montés adjacents à l'ensemble démultiplicateur de l'arbre d'entrée, le premier engrenage d'entrée (21) étant fixé à l'arbre d'entrée, le deuxième engrenage d'entrée étant monté de manière rotative sur le même arbre d'entrée, et le troisième engrenage d'entrée étant monté de manière rotative sur un premier manchon (220) formé en tant qu'extension du deuxième engrenage d'entrée ;
une premier unité semblable à un ressort (30) montée entre l'arbre d'entrée et le premier manchon, l'extrémité avant de ladite unité étant verrouillée à l'arbre d'entrée et au premier manchon par une première broche de fixation (300), la seconde partie d'extrémité de l'arbre d'entrée étant munie d'un premier adaptateur (32) ayant une première extrémité venant en butée contre l'unité semblable à un ressort à l'aide de cliquets (301, 321) fournis dessus, une deuxième broche de fixation (320) étant fournie entre le premier adaptateur et l'arbre d'entrée, un premier écrou d'arrêt (34) étant verrouillé à cette partie de l'arbre d'entrée entre le premier adaptateur et la seconde extrémité de l'arbre d'entrée, un premier manchon pousseur (36) étant monté sur le périmètre du premier adaptateur, la première extrémité du premier adaptateur venant en butée contre la surface annulaire la plus extérieure du cliquet de la première unité semblable à un ressort, et la périphérie du premier manchon pousseur étant entourée par un premier ressort;
une seconde unité semblable à un ressort (31) située entre le premier manchon et un second manchon (230) formé en tant qu'extension du troisième engrenage d'entrée, une première extrémité de ladite unité étant verrouillée au second manchon par une troisième broche de fixation (310), un second adaptateur (33) étant fourni sur l'arbre d'entrée entre la seconde unité semblable à un ressort et la seconde extrémité de l'arbre d'entrée, une première extrémité du second adaptateur formant une relation de recouvrement avec la surface exposée de la seconde unité semblable à un ressort en raison de la présence des cliquets (311, 331) sur les deux composants, le second adaptateur et le second manchon étant fixés l'un à l'autre par une quatrième broche de fixation (330), un second écrou d'arrêt étant verrouillé à une seconde extrémité du second adaptateur, un second manchon pousseur (37) étant monté sur le périmètre du second adaptateur, une première extrémité du second manchon pousseur venant en butée contre l'anneau le plus extérieur du cliquet de la seconde unité semblable à un ressort, le périmètre du second manchon pousseur étant entouré par un deuxième ressort ;
un disque de régulation de vitesse (4), monté sur la seconde extrémité de l'arbre d'entrée, et dont l'angle de rotation est commandé par un levier (42), le disque de régulation de vitesse étant divisé en trois cellules, chacune étant munie d'une bille de roulement (40) sur un anneau intérieur, et avec une bille de roulement (41) sur un anneau extérieur, les deux billes étant alignées de manière concentrique avec le disque de régulation de vitesse, et venant respectivement en butée contre le côté de la seconde unité semblable à un ressort le plus proche de la seconde extrémité de l'arbre d'entrée, chaque cellule étant de plus fournie avec quatre cannelures pour contenir lesdites billes de roulement, dont chaque première rainure (43) se trouve à une position d'extrémité de la cellule respective et sur l'anneau intérieur, la deuxième rainure respective (44) se trouve à l'autre position d'extrémité de cette cellule et sur l'anneau intérieur, cette deuxième rainure étant espacée de ladite première rainure pour laisser un espacement pour que deux billes de roulement s'alignent côte à côte, la troisième rainure respective (45) se trouve à l'autre position d'extrémité de cette cellule et sur l'anneau extérieur, et la quatrième rainure respective (46) se trouve en une position située à une distance d'une bille de roulement depuis la troisième rainure entre la troisième rainure et la bille de roulement de l'anneau extérieur, toutes les lesdites rainures se rejoignant de manière progressive sur la surface du disque de régulation de vitesse dans la direction dans laquelle les billes de roulement sont guidées de telle sorte que chaque bille de roulement peut pénétrer en douceur dans chacune des rainures, ou la quitter ; et
un différentiateur de vitesse (7) ayant un boîtier extérieur (70) munie d'une glissière (8) dont le bord intérieur est mis en prise dans le boîtier extérieur du différentiateur de vitesse, de telle sorte que la glissière peut porter le différentiateur de vitesse en rotation, grâce à quoi la transmission de l'énergie s'effectue, un ensemble d'engrenage respectif étant fourni de chaque côté de la glissière, la glissière étant liée à une tige de commande (80) qui sert à porter la glissière pour glisser autour du boîtier extérieur du différentiateur de vitesse dont les extrémités de sortie s'étendent vers un arbre de sortie (5), une première extrémité de l'arbre de sortie étant fournie avec trois engrenages de sortie (51, 52, 53) pour former une mise en prise étroite avec les trois engrenages d'entrée ; **caractérisé par**
un train épicycloïdal (6) monté sur l'arbre de sortie derrière les trois engrenages de sortie, le train épicycloïdal comprenant un planétaire (60), le train épicycloïdal étant lié à un arbre de transmission intermédiaire (54) fourni en tant qu'extension des trois engrenages de sortie, le périmètre du train épicycloïdal étant une couronne dentée (61) susceptible d'être mise en prise avec le planétaire par un certain nombre de satellites (62), des couvercles (63, 64) sur les première et seconde extrémités du train épicycloïdal, les deux couvercles étant interverrouillés à l'aide d'arbres (65) à travers les satellites, le périmètre du premier couvercle s'étendant vers un point situé en dehors de la couronne dentée, un premier dispositif de freinage (66) étant fourni sur le premier couvercle, un second dispositif de freinage (67) étant fourni sur le côté extérieur de la couronne dentée, le périmètre du bord du second couvercle étant fourni avec un engrenage de face (640), l'extrémité étendue de la couronne dentée étant fournie avec un engrenage de bord (610) qui, avec l'engrenage de face situé sur le couvercle arrière qui réside sur l'une ou l'autre extrémité de l'espace de passage de la glissière, peut être assorti à l'ensemble d'engrenage sur la glissière.

2. Système de transmission automobile selon la revendication 1, dans lequel des couches de freinage sont fournies sur le premier couvercle et sur l'extérieur de la couronne dentée intérieure, en tant que partie de l'ensemble de freinage, et les deux couches peuvent être commandées séparément afin d'assurer la stabilité du véhicule qui circule.

3. Système de transmission automobile selon la revendication 1, dans lequel ledit ensemble de freinage fait partie d'un système de freinage ABS, et comprend deux disques de freinage, chacun étant fourni avec un freineur, le noyau de chaque disque de freinage étant étendu pour incorporer un engrenage de freinage, un premier engrenage extérieur étant fourni sur la périphérie du premier couvercle, et un second engrenage extérieur étant fourni sur la couronne dentée, de telle sorte qu'ensemble, ces deux engrenages extérieurs peuvent être mis en prise avec les deux engrenages de freinage afin de produire des actions de freinage.
